# EUROPEAN PATENT SPECIFICATION

(11) **EP 3 136 796 B1**
(45) Date of publication and mention of the grant of the patent: **31.07.2019**
(21) Application number: 15182804.3
(22) Date of filing: 27.08.2015
(51) Int. Cl.: H04W 52/04

(54) **TRANSMISSION POWER CONTROL WITH VARIABLE TRANSMISSION DURATION**
STEUERUNG DER ÜBERTRAGUNGSLEISTUNG MIT VARIABLER DAUER DER ÜBERTRAGUNG
COMMANDE DE PUISSANCE DE TRANSMISSION AVEC DURÉE VARIABLE DE TRANSMISSION

(43) Date of publication of application: 01.03.2017
(73) Proprietor: Kabushiki Kaisha Toshiba, Tokyo 105-8001 (JP)
(72) Inventor: YOKOTA, Ryuhei, Tokyo, 105-8001 (JP); KATSURAHARA, Ko, Tokyo, 105-8001 (JP)
(74) Representative: Henkel, Breuer & Partner

(56) References cited:
- EP-A1- 1 622 286
- GB-A- 2 355 367
- US-B1- 6 665 620

## Description

Embodiments described herein relate generally to an electronic apparatus having a wireless communication function and a method applied to the electronic apparatus.

Recently, various electronic apparatuses are provided with a wireless communication function. Such electronic apparatuses include a meter called a smart meter, for example, power, gas and water meters with a communication function. The smart meter periodically transmits the amount of electricity, gas or water consumed to a server of a power, gas or water company. The server performs an accounting in accordance with the consumed amount and transmits, for example, a charge to the smart meter. The smart meter also transmits power failure information and power recovery information such as an ID number of the smart meter to the server of the power company at the time of power failure and power recovery such that the power company can ascertain the situation of power failure in a service area.

For example, the smart meter is connected to the server as follows: The smart meter is wirelessly connected to a radio base station via a mobile phone network. The radio base station is connected to the Internet. As a result, the server connected to the Internet is connected to the smart meter.

The smart meter controls transmission power for wireless communication depending on, for example, electric field intensity. That is, the smart meter performs the wireless communication by large transmission power in an environment where the electric field intensity is low (weak electric field) and by small transmission power in an environment where the electric field intensity is high. Since power supplied to the smart meter is limited (for example, 6 W), however, the operation of the smart meter may be affected if the transmission power for wireless communication becomes too large because of the low electric field intensity, which may cause a sudden system failure and an unintended interruption of the wireless communication. EP 1 622 286 A1 discloses a method-comprising controlling communication between a mobile station and a network infrastructure of a wireless communication network. According to this document a change of a power class designation from a higher to a lower power class designation may occur in an increase of the number of slots used for transmitting from the mobile station. Further background state of the art is disclosed in US 6 665 620 B1. Finally, GB 2 355 367 A discloses that when a network instructs a mobile terminal to operate at a particular increased transmission power, it may at the same time instruct it to operate in a reduced number of time slots for transmission and/or reception. Similarly, if it is determined that the terminal should operate at a reduced power, it may operate in an increased number of time slots for transmission and/or reception.

Embodiments described herein aim to maintain wireless communication between an electronic apparatus and an external apparatus even when transmission power becomes large because of low electric field intensity. The above object is achieved by the combination of features of claim 1 or claim 7. The dependent claims are directed to different advantageous aspects of the invention.

A general architecture that implements the various features of the embodiments will now be described with reference to the drawings. The drawings and the associated descriptions are provided to illustrate the embodiments and not to limit the scope of the invention.
FIG. 1 is a block diagram showing an example of an entire network including an electronic apparatus according to an embodiment.
FIG. 2 is a circuit diagram showing an example of a system configuration of the electronic apparatus of the embodiment.
FIG. 3 is a block diagram showing an example of a configuration of a system controller, a 2G/3G device and a ZigBee (registered trademark) device of the embodiment.
FIG. 4 is a diagram showing an example of a time division multiple access (TDMA) frame for data transmission and reception by the electronic apparatus of the embodiment.
FIG. 5 is a view for explaining an example of a structure of slots included in the TDMA frame shown in FIG. 4.
FIG. 6 is a view for explaining an example of maximum transmission power of the electronic apparatus of the embodiment.
FIG. 7 is a flowchart showing an example of the procedure of a communication process executed by the electronic apparatus of the embodiment.

Various embodiments will be described hereinafter with reference to the accompanying drawings.

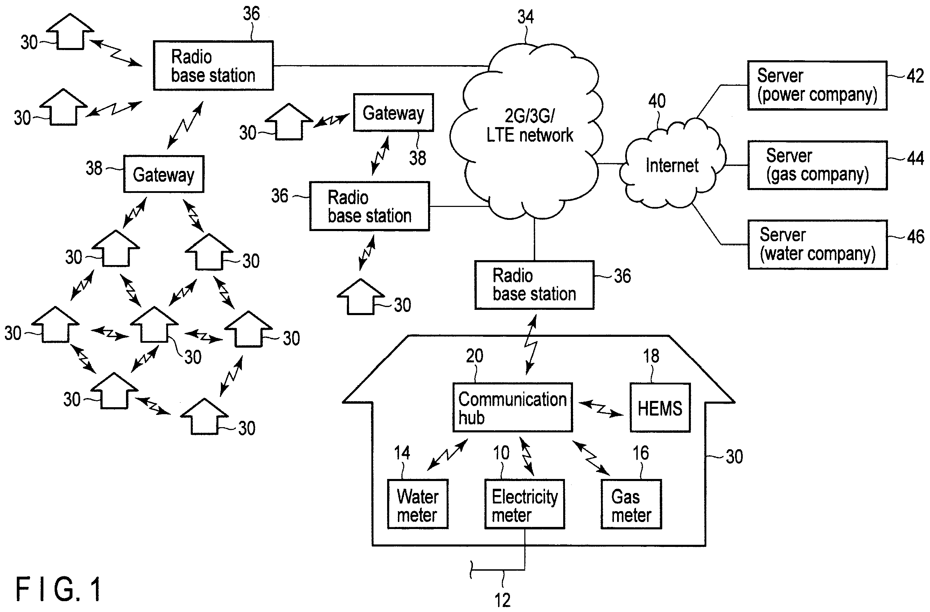

FIG. 1 is a block diagram showing an example of a state where an electronic apparatus of an embodiment is connected to a server via a network such as the Internet. The following description is based on the assumption that the electronic apparatus of the present embodiment is an electricity meter having a wireless communication function, namely, a smart meter, but the electronic apparatus of the present embodiment is not necessarily limited to the above-described meter and may be a meter other than the above-described meter. FIG. 1 further illustrates a gas meter and a water meter and shows an example where all meters use a single common wireless communication function, but it is also possible that each meter has a wireless communication function. FIG. 1 shows an example where a meter unit and a wireless communication unit are realized as separate units and are then combined together before factory-shipped or installed in a house, but it is also possible that the meter unit and the communication unit are realized integrally as a single unit. In the case of being combined together before installed in a house, these units may be combined detachably for convenience in replacing the communication unit when the communication unit is broken or its function needs to be upgraded. Note that data is transmitted or received between these units not only by a wired connection but also by a wireless communication. The meter unit supplies power to the communication unit. The meter unit connected to a commercial power source operates on commercial power. Therefore, the communication unit also operates on commercial power. The smart meter does not operate at the time of a power failure.

An electricity meter 10 as a meter unit is connected to a drop wire 12 which carries commercial power to each house. Since the structures of the houses are similar to each other, only a smart meter of one house will be exemplified. The smart meters of the other houses have the same structure. Note that each smart meter includes an arbitrary number of meter units. Depending on houses, it is possible to connect only an electricity meter to a communication hub 20 to use it as a smart meter and use the other meters not as smart meters. Meter reading data of the electricity meter 10 is transmitted to the communication hub 20 which is used as a wireless communication unit. Here, although it is possible to transmit the data by a wired communication, the following description is based on the assumption that the data is transmitted by a wireless communication to the communication hub 20 conforming to the ZigBee standard at regular intervals, for example, every 30 minutes. Although not necessary, it is possible to configure other meters such as a water meter 14 and a gas meter 16 to transmit meter reading data to the communication hub 20 as well. A home gateway 18 of home energy management systems (HEMS) may be connected to the communication hub 20, or the communication hub 20 may function as a home gateway of the HEMS.

The communication hub 20 transmits meter reading data received from the respective meters to servers 42, 44 and 46 of a power company, a water company and a gas company via the Internet 40 regularly, for example, every 30 minutes. Based on the data, the power company and the like can predict demand and appropriately adjust supply. The communication hub 20 and the Internet 40 are connected by using a mobile phone network 34 such as a mobile network of 2G, 3G, LTE or the like. The mobile phone network 34 is connected to the Internet 40 via a gateway (not shown). The communication 20 is connected to the Internet 40 not only via a mobile phone network but also via a power line communication (PLC) network using a power line as a communication line.

Not only the meter reading data but also other information may be transmitted from the communication hub 20 to the servers 42, 44 and 46. The drop wire 12 carrying commercial power to each house connects to the electricity meter 10 and the electricity meter 10 connects to the communication hub 20, and therefore the communication hub 20 may be configured to detect a power failure and to notify information on the power failure to the server 42. Based on the information, the power company can grasp an area in which a power failure has occurred in a timely manner and start restorations immediately after the power failure. The communication hub 20 is, as will be described later, provided with a large-capacitance capacitor as a standby power supply because the communication hub 20 will lose its power supply if a power failure occurs. The capacitor is charged continuously, and if a power failure occurs, the communication hub 20 transmits information on the power failure by using the charged power.

The server 42 may transmit to the communication hub 20, for example, an acknowledgement of a normal receipt of the meter reading data or the like transmitted from the communication hub 20, a program for upgrading the communication hub 20, and the like.

The communication hub 20 installed in the service area of a radio base station 36 is connected directly to the radio base station 36 via a mobile phone network. The communication hub 20 installed outside of the service area of the radio base station 36 is connected to a gateway 38 provided in the service area of the radio base station 36 via a multi-hop wireless communication network (also called an RF mesh network) conforming to the IEEE 802.15.4 standard. The gateway 38 can be connected to the radio base station 36 via a mobile phone network. In the RF mesh network, data is transmitted in such a manner as to multi-hop one communication hub 20 to another. In the RF mesh network, communication hubs are connected in a mesh-like manner under one communication hub (gateway). The gateway 38 is not necessarily a dedicated device, and the communication hub 20 installed in the service area of the radio base station 36 may operate as the gateway 38. The destination of data of each communication hub constituting the RF mesh network may be determined in advance by measuring the intensity of a received signal when installing the communication hub. Since multiple communication hubs are determined as candidates for the destination of data of each communication hub, it is also possible to determine the destination of data of each communication in such a manner as to minimize the cost by calculating the cost related to the communication quality and the like of each wireless communication path to the gateway.

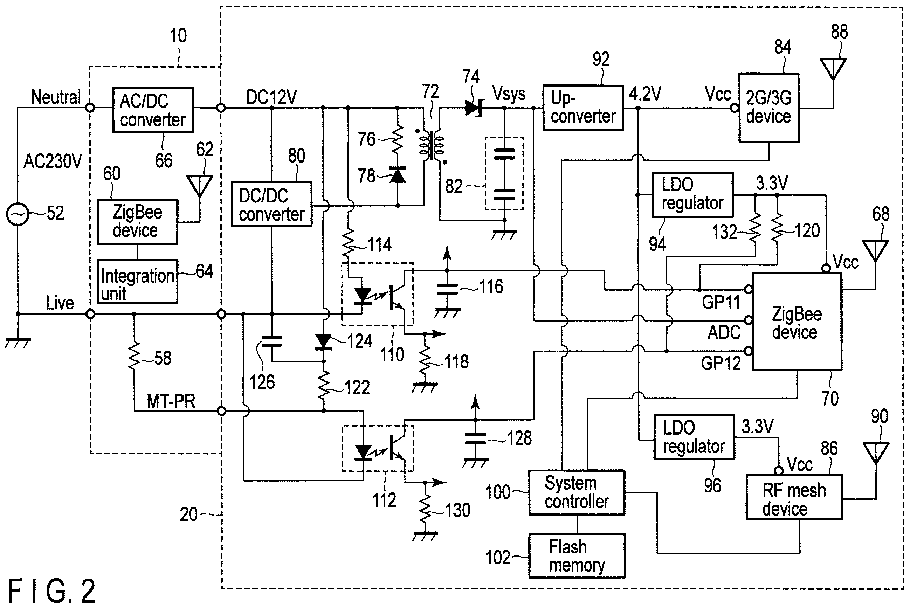

FIG. 2 is a circuit diagram showing an example of the smart meter implemented as the electronic apparatus of the embodiment. Ordinary commercial power (such as an AC 200 V or 100 V in Japan and AC 230 V in the UK) is applied to the electricity meter 10. Power supply lines for a commercial power 52 include, for example, an AC 230 V neutral line and a non-insulated and ground level live line.

The electricity meter 10 includes an AC/DC converter 66, a tamper detection pull-down resistor 58, a wireless communication device conforming to the ZigBee standard (hereinafter referred to as a ZigBee device) 60, an antenna 62, an integration unit 64, and the like. The AC voltage from the neutral line is supplied to the AC/DC converter 66, and then the AC voltage is converted to a DC voltage (for example, DC 12 V) and supplied as a power to the communication hub 20 via a connector. The live line bypasses the electricity meter 10 and is connected directly to the ground line of the communication hub 20. The connector between the electricity meter 10 and the communication hub 20 is provided with a tamper detection terminal MT_PR in addition to a DC 12 V terminal and a live line terminal. The tamper detection terminal MT_PR of the communication hub 20 is connected to the live line via the pull-down resistor 58 (of, for example, 10 Q) in the electricity meter 10.

House wiring connecting to electric apparatuses (not shown) is connected to the electricity meter 10, and an integration value of power consumed by the electric apparatuses is calculated by the integration unit 64. The integration value of the consumed power is wirelessly transmitted to the communication hub 20 via the ZigBee device 60 and the antenna 62 at regular intervals (for example, every 30 minutes). However, the above-described structure is in no way restrictive, and it is also possible to transmit the meter reading data of the electricity meter 10 to the communication hub 20 (system controller 100 which will be described later) by a wired connection via a connector.

Since the data of the consumed amount of gas and the data of the consumed amount of water which are obtained from the meters other than the electricity meter such as the gas meter 16 and the water meter 14 are transmitted to the communication hub 20 from ZigBee devices provided in the respective meters, the communication hub 20 can receive these data via an antenna 68 and a ZigBee device 70. That is, the communication hub 20 can receive not only the meter reading data of the electricity meter 10 but alto the meter reading data of various other meters wirelessly at regular intervals (for example, every 30 minutes) and transfer the data to servers.

The DC voltage of, for example, 12 V supplied from the electricity meter 10 to the communication hub 20 is transformed by a transformer 72 and is output as a Vsys voltage of, for example, 4.2 V via a diode 74. Both ends of a primary coil of the transformer 72 are connected to each other via a resistor 76 and a diode 78. The DC/DC converter 80 is also connected on the primary side of the transformer 72 and is supplied with the DC 12 V. Both ends of a secondary coil of the transformer 72 are connected to each other via a large-capacitance electric-double-layer capacitor (also called an ultracapacitor) 82, and the output voltage Vsys of the transformer 72 is charged in the electric-double-layer capacitor 82. Since the electric-double-layer capacitor 82 includes a cathode and an anode which respectively constitute electric-double-layers, the electric-double-layer capacitor 82 is equivalent to two capacitors connected in series. Each capacitor has a capacitance of 25 F, and the electric-double-layer capacitor 82 equivalent to two capacitors connected in series has a capacitance of 12.5 F. The electric-double-layer capacitor 82 may be replaced with a battery which accumulates power.

Although the communication hub 20 operates on power supplied from the electricity meter 10 as described above, the upper limit of the power which can be supplied from the electricity meter 10 to the communication hub 20 is fixed (for example, 6 W). There are some cases where a mobile phone, in particular, at the time of 2G transmission instantaneously requires a large amount of power and therefore the power supplied from the electricity meter 10 becomes insufficient. In the 2G transmission, if the intensity of a signal received in the radio base station is weak, the server gives an instruction to the communication hub 20 to increase the transmission output power, and the communication hub 20 accordingly increases the transmission output power. Here, there are some cases where an instantaneous value of the power exceeds the upper limit. As an assist power supply for such cases, the electric-double-layer capacitor 82 is provided. Further, as described above, the electric-double-layer capacitor 82 is provided also as a standby power supply configured, if a power failure occurs, to supply power for transmitting power failure information to the server 42. The capacitance of the electric-double-layer capacitor 82 is set to such a value as to maintain the output voltage Vsys of the transformer 72 for a certain time even after the supply of the DC 12 V to the communication hub 20 is cut so that the communication hub 20 can perform data transmission for some time (for example, 30 minutes) even after a power failure occurs.

The communication hub 20 includes multiple, for example, three wireless communication devices including a wireless communication device conforming to mobile phone standards such as 2G, 3G and/or LTE (hereinafter referred to as a 2G/3G device) 84, a ZigBee device 70, an RF mesh device (wireless communication device conforming to the IEEE 802.15.4 standard and constituting an RF mesh network) 86 and the like. The ZigBee device 70 is provided for receiving meter reading data from each meter, and the 2G/3G device 84 and the RF mesh device 86 are provided for transmitting the meter reading data of each meter received from the ZigBee device 70 to servers or for receiving data from the servers.

To communication devices 70, 84 and 86, antennas 68, 88 and 90 are connected, respectively. Antennas 68, 88 and 90 are attached at the time of manufacturing a product and provided inside the housing (not shown) of the communication hub 20.

As described above, for transmitting meter reading data to and receiving data from servers, the 2G/3G device 84 is used in the service area of the radio base station 36, and the RF mesh device 86 is used in the outside of the service area of the radio base station 36. In this way, either the 2G/3G device 84 or the RF mesh-device 86 is used for the wireless communication with the servers based on the electric field intensity in an installation location of the communication hub 20. Here, although the other one of these communication devices seems to become unnecessary, there are some cases where the electric field intensity changes after installation because of construction of a new radio base station, construction of a building which disturbs radio or the like, and therefore the communication hub 20 includes both communication devices and configured, when the communication hub 20 becomes unable to continue a wireless communication by one device, to switch to the other device to continue the wireless communication. Note that it is also possible in an apartment building, an office building and the like to connect the communication hub 20 to the Internet 40 via the PLC network using a power line as a communication line.

The operating voltage of the 2G/3G device 84 is 3.4 to 4.2 V (typically 3.8 V), and on the other hand, the operating voltages of the ZigBee device 70 and the RF mesh device 86 are 3.3 V (typically). The voltage of the electric-double-layer capacitor 82 decreases from 4.2 V when the DC 12 V is cut because of a power failure or the like, but since the output Vsys of the transformer 72 is stepped up, for example, to a DC 4.2 V by an upconverter 90 and supplied to the supply terminal Vcc of the 2G/3G device 84, the 2G/3G device 84 can operate even at the time of a power failure. The 2G/3G device 84 can transmit meter reading data to, for example, the server 42 of a power company even at the time of a power failure by communicating with the radio base station 36 via antenna 88.

The output Vsys of the transformer 72 is transformed into 3.3 V by a low-dropout (LDO) regulator 94 and supplied to the supply terminal Vcc of the ZigBee device 70. Therefore, the ZigBee device 70 can operate at the time of a power failure as well. The ZigBee device 70 receives meter reading data from each meter by communicating with the meter via antenna 68. The RF mesh device 86 transmits the received meter reading data to the gateway 38 by way of (by hopping) RF mesh devices of other communication hubs 20 via the antenna 90. The 2G/3G device 84 transmits the received meter reading data or meter reading data received from other communication hubs to the radio base station 36 via the antenna 88.

The output Vsys of the transformer 72 is transformed into 3.3 V by the LDC regulator 96 and supplied to the supply terminal Vcc of the RF mesh device 86. Therefore, the RF mesh device 86 can operate even at the time of a power failure as well. The RF mesh device 86 forms a wireless mesh network with other communication hubs 20 via the antenna 90, thereby transmitting meter reading data to the gateway 38.

The 2G/3G device 84, the ZigBee device 70, and the RF mesh device 86 are connected to a system controller 100, and the system controller 100 controls the transmission and reception of meter reading data. For example, meter reading data of each meter received by the ZigBee device 70 is transmitted from the 2G/3G device 84 or the RF mesh device 86 to the server at regular intervals under the control of the system controller 100. The system controller 100 connects to a flash memory 102. In the flash memory 102, identification information of the communication hub 20, meter reading data received from other meters, data necessary for performing the control and the like are written.

Since it is possible to detect a power failure by using a change in the power supply voltage supplied from the electricity meter 10, the detection of a power failure can be performed by any one of the communication devices 70, 84 and 86. Here, a case where the detection of a power failure is performed by the ZigBee device 70 will be described as an example. It is also possible to perform the detection in the other devices by applying similar modifications thereto. The ZigBee device 70 includes a GPI1 terminal, a GPI2 terminal and an ADC terminal for power failure detection.

The voltage from the electricity meter 10 is a non-insulated voltage, and thus it is preferable to insulate a circuit (communication device) of the communication hub 20, which implements a power failure detection function, from the electricity meter 10. Therefore, although the output Vsys of the transformer 72 is directly connected to the ADC terminal of the ZigBee device 70, the DC 12 V supplied from the electricity meter 10 is connected to the GPI1 terminal and the GPI2 terminal of the ZigBee device 70 via photocouplers 110 and 112. In this way, the ZigBee device 70 is insulated from a commercial power source.

The anode of the LED of photocoupler 110 is connected to the DC 12 V line via a resistor 114, and the cathode thereof is connected to the live line. The collector of the phototransistor of photocoupler 110 is connected to the GPI1 terminal and is also grounded via a capacitor 116. The emitter of the phototransistor of photocoupler 110 is grounded via a resistor 118. The GPI1 terminal is connected to the output voltage of 3.3 V of the LDO regulator 94 via a resistor 120.

In this way, the DC 12 V on the primary side is inverted by photocoupler 110 and transmitted to the secondary side, and a change of the power supply is detected at the GPI1 terminal. In doing this, since the secondary side of the transformer 72 is connected to the electric-double-layer capacitor 82 and the output voltage Vsys of the transformer 72 will be maintained for a certain time even after the power supply (DC 12 V) is cut, the ZigBee device 70 can continue operation during that time and thus detect the change at the GPI1 terminal from low to high.

The anode of the LED of photocoupler 112 is connected to the tamper detection terminal MT_PR and also connected to the DC 12 V line via a resistor 112 (of, for example, 510 Ω) and a diode 124. The connection point of resistor 122 and diode 124 is connected to the live line via a capacitor 126 (of, for example, 22 µF). The tamper detection terminal MT_PR is connected to the live line via the pull-down resistor 58 in the electricity meter 10, and thus the anode of the LED of photocoupler 112 is also connected to the live line via the pull-down resistor 58. The cathode of the LED of photocoupler 112 is connected to the live line. That is, the pull-down resistor 58 is connected between the anode and the cathode of the LED of photocoupler 112. The collector of the phototransistor of photocoupler 112 is connected to the GPI2 terminal and also grounded via a capacitor 128. The emitter of the phototransistor of photocoupler 112 is grounded via a resistor 130. The GPI2 terminal is connected to the output voltage of 3.3 V of the LDO regulator 94 via a resistor 132.

The DC 12 V on the primary side is inverted by photocoupler 112 and transmitted to the secondary side, and a change of the power supply is detected at the GPI2 terminal. In doing this, since the secondary side of the transformer 72 is connected to the electric-double-layer capacitor 82 and the output voltage Vsys of the transformer 72 is maintained for a certain time even after the power supply (DC 12 V) is cut, the ZigBee device 70 can continue operation during that time and thus detect the change at the GPI2 terminal from high to low.

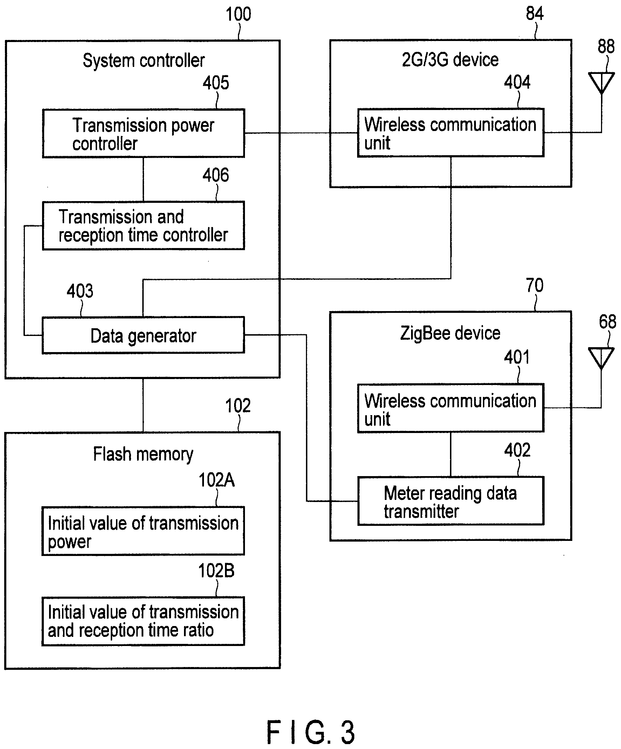

FIG. 3 shows an example of a configuration of the 2G/3G device 84, the ZigBee device 70 and the system controller 100 related to control of transmission power of wireless communication with the server. The system controller 100 includes a transmission power controller 405, a transmission and reception time controller 406 and a data generator 403. The 2G/3G device 84 includes a wireless communication unit 404. The ZigBee device 70 includes a wireless communication unit 401 and a meter reading data transmitter 402.

The transmission power controller 405 of the system controller 100 controls power for data transmission (transmission power) by the 2G/3G device 84 (i.e., the wireless communication unit 404 and the antenna 88). At the start of communication by the 2G/3G device 84, the transmission power controller 405 reads an initial value 102A of the transmission power stored in the flash memory 102. Then, the transmission power controller 405 sets the read initial value 102A of transmission power to the power for data transmission by the 2G/3G device 84.

The transmission and reception time controller 406 of the system controller 100 controls a ratio between time of data transmission and time of data reception by the 2G/3G device 84 (i.e., the wireless communication unit 404 and the antenna 88). At the start of communication by the 2G/3G device 84, the transmission and reception time controller 406 reads an initial value 102B of a transmission and reception time ratio stored in the flash memory 102. Then, the transmission and reception time controller 406 sets the read initial value 102B of the transmission and reception time ratio to the ratio between time of data transmission and time of data reception by the 2G/3G device 84. The transmission and reception time controller 406 determines a structure of a communication frame for data transmission and reception based on the set ratio.

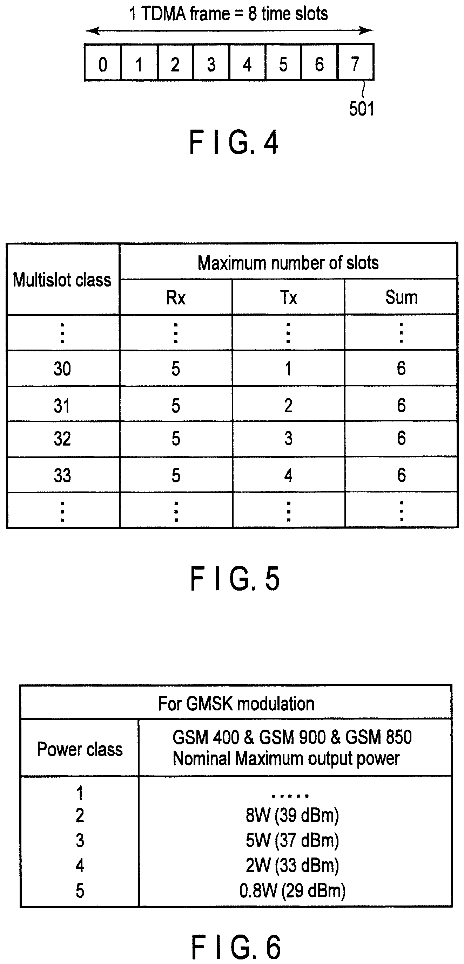

FIG. 4 shows an example of a structure of a communication frame. The communication frame 501 is, for example, a time division multiple access (TDMA) frame 501. As shown in FIG. 4, the TDMA frame 501 includes time slots. For example, the Third Generation Partnership Project (3GPP), which is a communication standard of the mobile phone network, defines that a TDMA frame 501 of 2G communication includes eight time slots. A TDMA frame length is 4.615 ms and a time slot length is 0.577 ms. The transmission and reception time controller 406 determines a structure of transmission slots (Tx), reception slots (Rx) and switching slots (Idle) in the time slots included in the communication frame (TDMA frame) 501.

FIG. 5 shows the structure of the slots included in the TDMA frame 501 defined by 3GPP. When the communication hub 20 (2G/3G device 84) supports the use of multiple time slots, it shall belong to one of multislot classes as shown in FIG. 5. Rx describes the maximum number of reception slots that the communication hub 20 can use per TDMA frame 501. The communication hub 20 must be able to support all integer values of reception slot from 0 to Rx (depending on the services supported by the communication hub 20). The reception slot need not be contiguous. The reception slot may be allocated within window of size Rx, and no transmission slot shall occur between reception slots within a TDMA frame 501. Tx describes the maximum number of transmission slots that the communication hub 20 can use per TDMA frame 501. The communication hub 20 must be able to support all integer values of transmission slot from 0 to Tx (depending on the services supported by the communication hub 20). The transmission slot need not be contiguous. The transmission slot may be allocated within window of size Tx, and no reception slot shall occur between transmission slots within a TDMA frame 501. Sum is the total number of transmission (uplink) and reception (downlink) time slots that can actually be used by the communication hub 20 per TDMA frame 501. The communication hub 20 must be able to support all combinations of integer values of Rx and Tx time slots where 1 ≤ Rx + Tx ≤ Sum (depending on the services supported by the communication hub 20). Sum is not applicable to all classes.

For example, a slot structure of multislot class = 33 shown in FIG. 5 is set as the initial value 102B of the transmission and reception time ratio. Since the maximum number of slots defined by multislot class = 33 is Rx = 5, Tx = 4 and Sum = 6, the transmission and reception time controller 406 can set one to four of the eight time slots included in the TDMA frame 501 as transmission slots. The number of transmission slots is arbitrary set from one to four depending on, for example, the amount of transmitted data. Therefore, if the ratio between data transmission time and data reception time is set at the initial value 102B of the transmission and reception time ratio (multislot class = 33) and the transmission time is maximum, time slots included in the TDMA frame 501 are constituted by, for example, four transmission slots (Tx), two reception slots (Rx) and two switching slots (Idle).

The data generator 403 of the system controller 100 generates data for transmission slots including meter reading data of at least one of the electricity meter 10, the water meter 14 and the gas meter 16. The data for transmission slots is generated in accordance with the structure of the time slots in the communication frame 501 determined based on the ratio between transmission time and reception time per unit time. The meter reading data is received from at least one of the electricity meter 10, the water meter 14 and the gas meter 16 via the wireless communication unit 401 and the antenna 68 of the ZigBee device 70. The meter reading data transmitter 402 of the ZigBee device 70 transmits the received meter reading data to the system controller 100. The data generator 403 generates data for transmission slots by using the meter reading data received from the meter reading data transmitter 402, and transmits the generated data to the 2G/3G device 84.

The wireless communication unit 404 of the 2G/3G device 84 transmits data to and receives data from the server 42, 44 or 46. For example, the wireless communication unit 404 transmits the data generated by the data generator 403 to the server 42, 44 or 46 at times corresponding to the transmission slots in the communication frame 501, and receives data from the server 42, 44 or 46 at times corresponding to the reception slots in the communication frame 501. The wireless communication unit 404 transmits the data by the transmission power set by the transmission power controller 405.

Data received from the server 42, 44 or 46 may include a request to increase the transmission power. The server 42, 44 or 46 requests the communication hub 20 to increase the transmission power if the electric field intensity at the time data is transmitted by the communication hub 20 (2G/3G device 84) is low (for example, smaller than a threshold value). The server 42, 44 or 46 may also notify the communication hub 20 that the electric field intensity is low if the electric field intensity at the time data is transmitted by the communication hub 20 is low. Instead, the radio base station 36 may request the communication hub 20 to increase the transmission power or notify the communication hub 20 that the electric field intensity is low if the electric field intensity at the time data is transmitted by the communication hub 20 is low. The transmission power controller 405 increases the power for data transmission by the 2G/3G device 84 in response to reception of such a request and notification via the wireless communication unit 404.

FIG. 6 shows an example of the maximum transmission power defined by 3GPP, which is the communication standard of the mobile phone network, per power class. The transmission power can be controlled in stages by the setting of a transmitter (communication unit 404), which is determined depending on the radio wave environment by the communication with the base station 36. In a transmitter capable of 2G communication, transmission output power can satisfy the maximum transmission power such that a communication available area is a desired area. For example, the maximum transmission power is set at 2 W (33 dBm) of power class = 4 shown in FIG. 6, when data is transmitted and received in Gaussian maximum shift keying (GMSK) in 2G (GSM 400, GSM 900, GSM 850 or GSM 700). For example, the transmission power controller 405 can increase the transmission power up to 2 W (33 dBm). It should be noted that the transmission power set by the transmission power controller 405 is the average power in the data transmission, and larger power (for example, 4 W) is often required as an instantaneous value.

The communication hub 20 is connected to the electricity meter 10 connected to the commercial power source 52, and is operated by constant power (for example, 6 W) supplied from the electricity meter 10. Therefore, if the transmission power is increased by the transmission power controller 405, an instantaneous value (peak value) of power consumed by the communication hub 20 may exceed the constant power. As an auxiliary power for such a case, an electric-double-layer capacitor 82 is provided in the communication hub 20. If the consumed power (for example, 5 W) by the communication hub 20 is smaller than the constant power (for example, 6 W) supplied from the external electricity meter 10, the communication hub 20 charges the electric-double-layer capacitor 82 by using a part of the constant power. If an instantaneous value of the consumed power (for example, 8 W) by the communication hub 20 exceeds the constant power (for example, 6 W) supplied from the electricity meter 10, the communication hub 20 is driven by using the constant power and power (for example, 2 W) discharged from the electric-double-layer capacitor 82. However, if the consumed power by the communication hub 20 remains high, for example, if the average power consumed by the communication hub 20 continuously exceeds 6 W which can be supplied from the electricity meter 10, power (electric charge) discharged from the electric-double-layer capacitor 82 may run out. Because of this, a sudden system failure of the communication hub 20 or an unintended interruption of the wireless communication may occur.

If the increase in the instantaneous value of the power in the communication hub 20 caused by the increase in the transmission power is limited, however, the transmission power necessary for communication cannot be achieved. Because of this, the communication cannot be performed in the environment where the electric field intensity is low. As a result, the communication available range is narrowed contrary to the demands of the user of the smart meter.

Therefore, in the present embodiment, the average power consumed in the communication hub 20 is prevented from remaining high by limiting time of data transmission which requires the increased transmission power. A shortage in the power supplied to the communication hub 20 can be thereby avoided even if the transmission power is increased.

If the transmission power is increased and the increased transmission power is larger than or equal to a threshold value, the transmission and reception time controller 406 decreases a ratio of transmission time per unit time. For example, the threshold value is set at 2 W (33 dBm) of power class = 4 shown in FIG. 6, when data is transmitted and received in 2G. The wireless communication unit 404 transmits data to the server 42, 44 or 46 within transmission time based on the decreased ratio.

More specifically, if the increased transmission power is larger than or equal to the threshold value, the transmission and reception time controller 406 decreases a ratio of transmission slots to time slots included in a frame for transmitting data to the server 42, 44 or 46. For example, if the power for data transmission by the 2G/3G device 84 is larger than or equal to 2 W (33 dBm), the transmission and reception time controller 406 sets a slot structure of multislot class = 30 shown in FIG. 5 as the transmission and reception time ratio in order to decrease the ratio of transmission time per unit time. Since the slot structure of multislot class = 30 is Rx = 5, Tx = 1 and Sum = 6, the transmission and reception time controller 406 sets one of the eight time slots included in the TDMA frame 501 as a transmission slot. Therefore, the time slots included in the TDMA frame 501 are constituted by one transmission slot (Tx), five reception slots (Rx) and two switching slots (Idle). The slot structure for decreasing the ratio of transmission time per unit time is not limited to multislot class = 30, and may be any slot structure as long as the number of transmission slots is three or less.

The data generator 403 generates data for transmission slots including meter reading data of at least one of the electricity meter 10, the water meter 14 and the gas meter 16, in accordance with the set structure of the time slots in the communication frame 501. The data generator 403 outputs the generated data to the 2G/3G device 84.

The wireless communication unit 404 of the 2G/3G device 84 transmits data to and receives data from the server 42, 44 or 46. For example, the wireless communication unit 404 transmits the generated data to the server 42, 44 or 46 at a time corresponding to the transmission slot in the communication frame 501, and receives data from the server 42, 44 or 46 at times corresponding to the reception slots.

As described above, a transmission slot (Tx) is included in the TDMA frame 501 of multislot class = 30, while four transmission slots (Tx) are included in the TDMA frame 501 of multislot class = 33. The power consumed in a period of reception slots including power for data reception is generally smaller than the power consumed in a period of transmission slots including power for data transmission. Therefore, the time when the increased transmission power is consumed can be reduced by decreasing the ratio of transmission time per unit time, i.e., decreasing the ratio of transmission slots in the communication frame 501. Since the average power consumed in the communication hub 20 is not increased even if the transmission power is increased, a sudden system failure of the communication hub 20 and an unintended interruption of the wireless communication caused by a shortage of the power stored in the electric-double-layer capacitor 82 can be avoided. In addition, since data can be transmitted by the maximum transmission power defined by the communication standard such as 2G, 3G or LTE, the communication can be supported without narrowing the communication available range.

If the increased transmission power is smaller than the threshold value (for example, 2 W [33 dBm]), the transmission and reception time controller 406 maintains the transmission and reception time ratio, for example, in the slot structure of multislot class = 33 shown in FIG. 5. Since the slot structure of multislot class = 33 is Rx = 5, Tx = 4 and Sum = 6, the transmission and reception time controller 406 sets one to four of the eight time slots included in the TDMA frame 501 as transmission slots. The number of transmission slots is arbitrary set from one to four depending on, for example, the amount of data to be transmitted. That is, if the increased transmission power is smaller than the threshold value, the transmission and reception time controller 406 can set the ratio of transmission slots within a range defined by the slot structure of multislot class = 33.

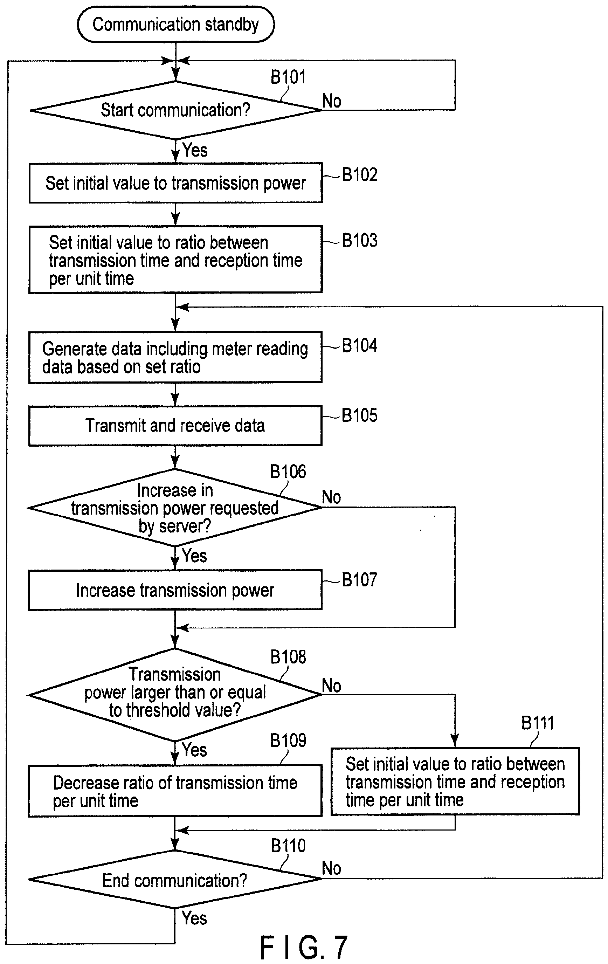

Next, an example of the procedure of a communication process executed by the communication hub 20 is described with reference to a flowchart of FIG. 7. It is assumed that the communication hub 20 is in a standby state of waiting a start of communication.

First, the transmission power controller 405 and the transmission and reception time controller 406 of the system controller 100 determine whether communication with the server 42, 44 or 46 is started (block B101). For example, the transmission power controller 405 and the transmission and reception time controller 406 determines whether it is time to transmit the consumed amount of electricity, gas or water to the server 42, 44 or 46 of the power, gas or water company. If communication with the server 42, 44 or 46 is not started (No in block B101), the communication hub 20 remains in the standby state.

If communication with the server 42, 44 or 46 is started (Yes in block B101), the transmission power controller 405 sets an initial value to transmission power for data transmission by the wireless communication unit 404 of the 2G/3G device 84 (block B102). For example, the transmission power controller 405 reads an initial value 102A of transmission power stored in the flash memory 102 and sets the read initial value 102A to the transmission power. The transmission and reception time controller 406 sets an initial value 102B to a ratio between transmission time and reception time per unit time in wireless communication by the wireless communication unit 404 (2G/3G device 84) (block B103). For example, the transmission and reception time controller 406 reads the initial value 102B of a transmission and reception time ratio stored in the flash memory 102, and sets the read initial value 102B to the ratio between transmission time and reception time per unit time. The transmission and reception time controller 406 determines a structure of transmission slots (Tx) and reception slots (Rx) in time slots included in a communication frame (TDMA frame) 50, based on the set ratio. Since the initial value 102B is multislot class = 33 of Rx = 5, Tx = 4 and Sum = 6, four transmission slots, two reception slots and two idle slots are set in this case.

The data generator 403 generates data including meter reading data based on the set ratio between transmission time and reception time per unit time (block B104). More specifically, the data generator 403 generates data for transmission slots including meter reading data of at least one of the electricity meter 10, the water meter 14 and the gas meter 16, in accordance with the structure of the time slots in the communication frame 501 determined based on the set ratio between transmission time and reception time per unit time. The wireless communication unit 404 transmits data to and receives data from the server 42, 44 or 46 (block B105). For example, the wireless communication unit 404 transmits the generated data to the server 42, 44 or 46 at times corresponding to the transmission slots in the communication frame 501, and receives data from the server 42, 44 or 46 at times corresponding to the reception slots in the communication frame 501. The wireless communication unit 404 transmits data by the transmission power set by the transmission power controller 405.

Next, the transmission power controller 405 determines whether an increase in the transmission power has been requested by the server 42, 44 or 46 (block B106). The server 42, 44 or 46 requests the communication hub 20 to increase the transmission power if the electric field intensity at the time data is transmitted by the communication hub 20 (2G/3G device 84) is low (for example, smaller than a threshold value). For example, the transmission power controller 405 determines that an increase in the transmission power has been requested by the server 42, 44 or 46 when the request is received via the wireless communication unit 404 of the 2G/3G device 84.

If an increase in the transmission power has been requested by the server 42, 44 or 46 (Yes in block B106), the transmission power controller 405 increases the transmission power for data transmission by the 2G/3G device 84 (block B107). The server 42, 44 or 46 may notify the communication hub 20 that the electric field intensity is low if the electric field intensity at the time data is transmitted by the communication hub 20 is low. The transmission power controller 405 increases the transmission power for data transmission by the 2G/3G device 84 in response to the notification.

Next, the transmission and reception time controller 406 determines whether the increased transmission power is larger than or equal to a threshold value (block B108). As shown in FIG. 6, for example, the threshold value is set at 2 W (33 dBm) based on the protocol of 3GPP which is the cellular communication standard when data is transmitted and received in 2G. If an increase in the transmission power has not been requested by the server 42, 44 or 46 (No in block B106), block B107 is skipped and block B108 is executed.

If the increased transmission power is larger than or equal to the threshold value (Yes in block B108), the transmission and reception time controller 406 decreases a ratio of transmission time per unit time (block B109). More specifically, the transmission and reception time controller 406 determines a structure of transmission slots (Tx) and reception slots (Rx) in time slots included in a communication frame (TDMA frame) 501, based on the set ratio. Since four transmission slots and two reception slots are set by multislot class = 33 as the initial value of the slot structure, a slot structure of a class in which the number of transmission slots is three or less, for example, multislot class = 30, is set in order to decrease the ratio of transmission time. Since the slot structure of multislot class = 30 is Rx = 5, Tx = 1 and Sum = 6, the transmission and reception time controller 406 sets one of the eight time slots included in the TDMA frame 501 as a transmission slot. Therefore, the time slots included in the TDMA frame 501 are constituted by one transmission slot (Tx), five reception slots (Rx) and two switching slots (Idle).

Then, the data generator 403 determines whether to end the communication with the server 42, 44 or 46 (block B110). If the communication is ended (Yes in block B110), the communication hub 20 is switched to the standby state waiting a start of communication. If the communication is continued (No in block B110), the process returns to block B104 and data transmission to and data reception from the server 42, 44 or 46 based on the set ratio is continued.

If the increased transmission power is smaller than the threshold value (No in block B108), the transmission and reception time controller 406 returns the ratio of transmission time per unit time to the initial value (block B111). After block Bill, whether to end the communication is determined in block B110.

As described above, according to the present embodiment, wireless communication between an electronic apparatus and an external apparatus can be continued even if transmission power becomes large because of low electric field intensity. The wireless communication unit 404 of the 2G/3G device 84 wirelessly communicates with the server 42, 44 or 46 via the antenna 88. The transmission power controller 405 increases the transmission power used for the wireless communication in response to a notification from the server 42, 44 or 46. If the transmission power is larger than or equal to the threshold value, the transmission and reception time controller 406 decreases the ratio of transmission time per unit time in the wireless communication with the server 42, 44 or 46.

Therefore, even if the transmission power used for the wireless communication is set at the maximum transmission power defined by the communication standard, the average power consumed by the entire communication hub 20 including the 2G/3G device 84 can be regulated while maintaining the maximum transmission power (peak power) of the 2G/3G device 84 by decreasing the ratio of transmission time per unit time. Since the communication available range of the 2G/3G device 84 is not narrowed, the communication hub 20 of the smart meter can stably transmit meter reading data of the electricity meter 10, the water meter 14, the gas meter 16 and the like to the servers 42, 44 and 46.

In the above description, an electronic apparatus having a communication function has been assumed to be an electricity meter 10 to which a communication hub 20 is attached, namely, a smart meter, but the electronic apparatus may be any apparatus requiring a wireless connection with an external apparatus and may not necessarily be a meter.

Since the processing according to the present embodiment can be realized by a computer program, an advantage similar to that of the present embodiment can be easily realized merely by installing the computer program in a computer through a computer-readable storage medium storing the computer program and executing it.

The present invention is not limited to the above-described embodiments, but may be modified in various ways without departing from the scope. Various inventions can be realized by appropriately combining the structural elements disclosed in the embodiments. For instance, some of the disclosed structural elements may be deleted. Some structural elements of different embodiments may be combined appropriately.

## Claims

1. An electronic apparatus comprising:
a communication unit (404) configured to perform wireless communication with an external apparatus (42);
a first controller (405) configured to increase transmission power used for the wireless communication in response to a notification requesting an increase in the transmission power from the external apparatus (42); and
a second controller (406) configured to determine whether the increased transmission power is larger than or equal to a threshold value, and to decrease a ratio of transmission slots of time slots in a frame for communicating with the external apparatus (42), when the increased transmission power is larger than or equal to the threshold value, and to return the ratio of transmission slots of time slots in a frame for communicating with the external apparatus (42) to an initial value, when the increased transmission power is smaller than the threshold value, wherein the time slots comprise the transmission slots and reception slots, and the initial value is a value set by the second controller at a start of the wireless communication with the external apparatus. and
wherein the communication unit (404) is configured to transmit data to the external apparatus (42) at times corresponding to the transmission slots in the frame and to receive data from the external apparatus (42) at times corresponding to the reception slots in the frame.

2. The electronic apparatus of Claim 1, wherein
the electronic apparatus is connected to a second external apparatus (10) connected to a commercial power source (52), and is provided with constant power from the second external apparatus (10),
the electronic apparatus further comprises a capacitor (82) which is charged by using a part of the constant power when power consumed by the electronic apparatus is smaller than the constant power, and
the electronic apparatus is driven by using the constant power and power discharged from the capacitor (82) when the consumed power exceeds the constant power.

3. The electronic apparatus of Claim 2, wherein the threshold value is 33 dBm when power of 6 W is supplied from the second external apparatus (10) to the electronic apparatus and the wireless communication is performed in 2G.

4. The electronic apparatus of Claim 1, wherein the communication unit (404) is configured to transmit data to the external apparatus (42) during a transmission time period based on a ratio of the transmission slots in the frame.

5. The electronic apparatus of Claim 1, wherein
the frame comprises eight time slots, and
the second controller (406) is configured to:
set four of the eight time slots as transmission slots when the increased transmission power is smaller than the threshold value; and
set one of the eight time slots as a transmission slot when the increased transmission power is larger than or equal to the threshold value.

6. The electronic apparatus of Claim 1, wherein the communication unit (404) is configured to perform the wireless communication with the external apparatus (42) via a radio base station (36), and
the first controller (405) is configured to increase transmission power used for the wireless communication in response to a notification from the radio base station (36).

7. A method of managing power consumption by an electronic apparatus (20), the method comprising:
performing wireless communication with an external apparatus wherein a ratio of transmission slots of time slots in a frame for communicating with the external apparatus is set to an initial value;
increasing transmission power used for the wireless communication in response to a notification requesting an increase in the transmission power from the external apparatus (42); and
determining whether the increased transmission power is larger than or equal to a threshold value, and decreasing the ratio of transmission slots of time slots in a frame for communicating with the external apparatus (42) when the increased transmission power is larger than or equal to a threshold value, and returning the ratio of transmission slots of time slots in a frame for communicating with the external apparatus (42) to the initial value, when the increased transmission power is smaller than the threshold value,
wherein the time slots comprise the transmission slots and reception slots; and
transmitting data to the external apparatus (42) at times corresponding to the transmission slots in the frame; and
receiving data from the external apparatus (42) at times corresponding to the reception slots in the frame.

8. The method of Claim 7, wherein
the electronic apparatus (20) is connected to a second external apparatus (10) connected to a commercial power source (52), and is provided with constant power from the second external apparatus (10), and
the method further comprises:
charging a capacitor (82) by using a part of the constant power when power consumed by the electronic apparatus (20) is smaller than the constant power;
driving the electronic apparatus (20) by using the constant power and power discharged from the capacitor (82) when the consumed power exceeds the constant power.

9. The method of Claim 8, wherein the threshold value is 33 dBm when power of 6 W is supplied from the second external apparatus (10) to the electronic apparatus and the wireless communication is performed in 2G.

10. The method of Claim 7, wherein performing the wireless communication comprises transmitting data to the external apparatus (42) during a transmission time period based on the ratio of the transmission slots in the frame.

11. The method of Claim 10, wherein
the frame comprises eight time slots, and
the method further comprises:
setting four of the eight time slots as transmission slots when the increased transmission power is smaller than the threshold value; and
setting one of the eight time slots as a transmission slot when the increased transmission power is larger than or equal to the threshold value.

12. The method of Claim 7, wherein
performing the wireless communication comprises performing the wireless communication with the external apparatus (42) via a radio base station (36), and
increasing the transmission power comprises increasing transmission power used for the wireless communication in response to a notification requesting an increase in the transmission power from the radio base station (36).

## Patentansprüche

1. Elektronisches Gerät mit:
einer Kommunikationseinheit (404), die ausgestaltet ist, um drahtlose Kommunikation mit einem externen Gerät (42) durchzuführen;
einer ersten Steuerung (405), die ausgestaltet ist, um eine Übertragungsleistung zu erhöhen, die für die drahtlose Kommunikation verwendet wird, in Abhängigkeit von einer Mitteilung von dem externen Gerät (42), die einen Anstieg der Übertragungsleistung erfordert; und
einer zweiten Steuerung (406), die ausgestaltet ist, um zu bestimmen, ob die erhöhte Übertragungsleistung größer als oder gleich zu einen Schwellwert ist, und um ein Verhältnis der Übertragungsslots von Zeitslots in einem Frame für die Kommunikation mit dem externen Gerät (42) zu verringern, wenn die erhöhte Übertragungsleistung größer als oder gleich zu dem Schwellwert ist, und um ein Verhältnis der Übertragungsslots unter den Zeitslots in einem Frame für die Kommunikation mit dem externen Gerät (42) zu einem Anfangswert zurückbringen, wenn die erhöhte Übertragungsleistung kleiner als der Schwellwert ist, wobei die Zeitslots die Übertragungsslots und Empfangsslots umfassen, und wobei der Anfangswert ein Wert ist, der durch die zweite Steuerung eingestellt wird; und
wobei die Kommunikationseinheit (404) ausgestaltet ist, um Daten an das externe Gerät (42) zu Zeiten entsprechend den Übertragungsslots in dem Frame zu übertragen, und um Daten von dem externen Gerät (42) zu Zeiten entsprechend den Empfangsslots in dem Frame zu empfangen.

2. Elektronisches Gerät nach Anspruch 1, bei dem
das elektronische Gerät mit einem zweiten externen Gerät (10) verbunden ist, das mit einer kommerziellen Leistungsquelle (52) verbunden ist, und mit konstanter Leistung von dem zweiten externen Gerät (10) versorgt wird,
wobei das elektronische Gerät des Weiteren einen Kondensator (82) umfasst, der unter Verwendung von einem Teil der konstanten Leistung geladen wird, wenn die durch das elektronische Gerät verbrauchte Leistung kleiner als die konstante Leistung ist, und
wobei das elektronische Gerät unter Verwendung der konstanten Leistung und von Leistung, die von dem Kondensator (82) entladen wird, getrieben wird, wenn die verbrauchte Leistung die konstante Leistung übersteigt.

3. Elektronisches Gerät nach Anspruch 2, bei dem der Schwellwert gleich 33 dBm ist, wenn die Leistung 6 W von dem zweiten externen Gerät (10) zu dem elektronischen Gerät zugeführt wird und wenn drahtlose Kommunikation in 2G ausgeführt wird.

4. Elektronisches Gerät nach Anspruch 1, bei dem die Kommunikationseinheit (404) ausgeschaltet ist, um beruhend auf einem Verhältnis der Übertragungsslots in dem Frame Daten an das externe Gerät (42) während einer Übertragungszeitspanne zu übertragen.

5. Elektronisches Gerät nach Anspruch 1, bei dem
das Frame acht Zeitslots umfasst, und
die zweite Steuerung (406) ausgestaltet ist, um:
vier der acht Zeitslots als Übertragungsslots einzustellen, wenn die erhöhte Übertragungsleistung kleiner als der Schwellwert ist, und
einen der acht Zeitslots als Übertragungsslots einzustellen, wenn die erhöhte Übertragungsleistung größer oder gleich dem Schwellwert ist.

6. Elektronisches Gerät nach Anspruch 1, bei dem die Kommunikationseinheit (404) ausgestaltet ist, um die drahtlose Kommunikation mit dem externen Gerät (42) über eine Radiobasisstation (36) auszuführen, und
wobei die erste Steuerung (405) ausgestaltet ist, um in Abhängigkeit von einer Mitteilung von der Radiobasisstation (36) die Übertragungsleistung zu erhöhen, die für die drahtlose Kommunikation verwendet wird.

7. Verfahren zum Managen des Leistungsverbrauchs eines elektronischen Gerätes (20), wobei das Verfahren umfasst:
Durchführen einer drahtlosen Kommunikation mit einem externen Gerät, wobei ein Verhältnis von Übertragungsslots unter den Zeitslots in einem Frame für die Kommunikation mit dem externen Gerät auf einen Anfangswert eingestellt wird;
Erhöhen der Übertragungsleistung, die für die drahtlose Kommunikation verwendet wird, in Abhängigkeit von einer Mitteilung von dem externen Gerät (42), die eine Erhöhung der Übertragungsleistung anfordert; und
Bestimmen, ob die erhöhte Übertragungsleistung größer oder gleich einem Schwellwert ist, und
Verringern des Verhältnisses der Übertragungsslots unter den Zeitslots in einem Frame für die Kommunikation mit dem externen Gerät (42), wenn die erhöhte Übertragungsleistung größer oder gleich einem Schwellwert ist, und Zurückbringe des Verhältnisses der Übertragungsslots unter den Zeitslots in einem Frame für die Kommunikation mit dem externen Gerät (42) auf den Anfangswert, wenn die erhöhte Übertragungsleistung kleiner als der Schwellwert ist,
wobei die Zeitslots Übertragungsslots und Empfangsslots umfassen, und
Übertragung von Daten an das externe Gerät (42) zu Zeiten entsprechend den Übertragungsslots in dem Frame;
und Empfangen von Daten von dem externen Gerät (42) zu Zeiten entsprechend den Empfangsslots in dem Frame.

8. Verfahren nach Anspruch 7, bei dem
das elektronische Gerät (20) mit einem zweiten externen Gerät (10) verbunden ist, das mit einer kommerziellen Leistungsquelle (52) verbunden ist, und mit einer konstanten Leistung von dem externen Gerät (10) versorgt wird, und
wobei das Verfahren umfasst:
Laden eines Kondensators (82) unter Verwendung von einem Teil der konstanten Leistung, wenn Leistung, die durch das elektronische Gerät (20) verbraucht wird, kleiner als die konstante Leistung ist;
Treiben des elektronischen Geräts (20) unter Verwendung der konstanten Leistung und der Leistung, die von dem Kondensator (82) entladen wird, wenn die verbrauchte Leistung die konstante Leistung übersteigt.

9. Verfahren nach Anspruch 8, bei dem der Schwellwert 33 bDm ist, wenn die Leistung von 6 W von dem zweiten externen Gerät (10) zu dem elektronischen Gerät zugeführt wird, und die drahtlose Kommunikation in 2G ausgeführt wird.

10. Verfahren nach Anspruch 7, bei dem das Führen der drahtlosen Kommunikation das Übertragen von den Daten zu dem externen Gerät (42) während der Übertragungszeitspanne beruhend auf dem Verhältnis der Übertragungsslots in dem Frame umfasst.

11. Verfahren nach Anspruch 10, bei dem
das Frame acht Zeitslots umfasst, und
das Verfahren des Weiteren umfasst:
Einstellen von vier der acht Zeitslots als Übertragungsslots, wenn die erhöhte Übertragungsleistung kleiner als der Schwellwert ist; und
Einstellen von einem der acht Zeitslots als Übertragungsslot, wenn die erhöhte Übertragungsleistung größer als oder gleich zu dem Schwellwert ist.

12. Verfahren nach Anspruch 7, bei dem
das Durchführen der drahtlosen Kommunikation das Durchführen der drahtlosen Kommunikation mit dem externen Gerät (42) über eine Radiobasisstation (36) umfasst, und
wobei das Erhöhen der Übertragungsleistung ein Erhöhen der Übertragungsleistung umfasst, die für die drahtlose Kommunikation verwendet wird, in Abhängigkeit von einer Mitteilung von der Radiobasisstation (36), die eine Erhöhung in der Übertragung enthält.

## Revendications

1. Appareil électronique comprenant :
une unité de communication (404) conçue pour réaliser une communication sans fil avec un appareil externe (42) ;
un premier dispositif de commande (405) conçu pour augmenter la puissance de transmission utilisée pour la communication sans fil, en réponse à une notification demandant une augmentation de la puissance de transmission, émanant de l'appareil externe (42) ; et
un second dispositif de commande (406) conçu pour déterminer si la puissance de transmission augmentée est supérieure ou égale à une valeur de seuil et pour diminuer un rapport d'intervalles de transmission d'intervalles de temps dans une trame destinée à la communication avec l'appareil externe (42), lorsque la puissance de transmission augmentée est supérieure ou égale à la valeur de seuil, et pour ramener le rapport d'intervalles de transmission d'intervalles de temps dans une trame destinée à la communication avec l'appareil externe (42) à une valeur initiale, lorsque la puissance de transmission augmentée est inférieure à la valeur de seuil, dans lequel les intervalles de temps comprennent les intervalles de transmission et des intervalles de réception et la valeur initiale est une valeur définie par le second dispositif de commande ; et
dans lequel l'unité de communication (404) est conçue pour transmettre des données à l'appareil externe (42) à des instants correspondant aux intervalles de transmission dans la trame et pour recevoir des données en provenance de l'appareil externe (42) à des instants correspondant aux intervalles de réception dans la trame.

2. Appareil électronique selon la revendication 1, dans lequel :
l'appareil électronique est connecté à un second appareil externe (10) connecté à une source d'énergie commerciale (52), et est alimenté en puissance constante à partir du second appareil externe (10),
l'appareil électronique comprend en outre un condensateur (82) qui est chargé au moyen d'une partie de la puissance constante lorsque la puissance consommée par l'appareil électronique est inférieure à la puissance constante, et
l'appareil électronique est commandé au moyen de la puissance constante et d'une puissance débitée par le condensateur (82) lorsque la puissance consommée dépasse la puissance constante.

3. Appareil électronique selon la revendication 2, dans lequel la valeur de seuil est de 33 dBm lorsqu'une puissance de 6 W est fournie par le second appareil externe (10) à l'appareil électronique et la communication sans fil est réalisée en 2G.

4. Appareil électronique selon la revendication 1, dans lequel l'unité de communication (404) est conçue pour transmettre des données à l'appareil externe (42) au cours d'une période de temps de transmission sur la base d'un rapport des intervalles de transmission dans la trame.

5. Appareil électronique selon la revendication 1, dans lequel :
une trame comporte huit intervalles de temps, et
le second dispositif de commande (406) est conçu pour :
définir quatre des huit intervalles de temps en tant qu'intervalles de transmission, lorsque la puissance de transmission augmentée est inférieure à la valeur de seuil ; et
définir l'un des huit intervalles de temps en tant qu'intervalle de transmission, lorsque la puissance de transmission augmentée est supérieure ou égale à la valeur de seuil.

6. Appareil électronique selon la revendication 1, dans lequel l'unité de communication (404) est conçue pour réaliser la communication sans fil avec l'appareil externe (42) par le biais d'une station de base radioélectrique (36), et
le premier dispositif de commande (405) est conçu pour augmenter la puissance de transmission utilisée pour la communication sans fil, en réponse à une notification provenant de la station de base radioélectrique (36).

7. Procédé de gestion de la consommation de puissance par un appareil électronique (20), le procédé comprenant les étapes suivantes :
réaliser une communication sans fil avec un appareil externe (42), dans lequel un rapport d'intervalles de transmission des intervalles de temps dans une trame destinée à la communication avec l'appareil externe est défini à une valeur initiale ;
augmenter la puissance de transmission utilisée pour la communication sans fil, en réponse à une notification demandant une augmentation de la puissance de transmission, émanant de l'appareil externe (42) ; et
déterminer si la puissance de transmission augmentée est supérieure ou égale à une valeur de seuil, et
diminuer le rapport d'intervalles de transmission d'intervalles de temps dans une trame destinée à la communication avec l'appareil externe (42), lorsque la puissance de transmission augmentée est supérieure ou égale à une valeur de seuil,
et ramener le rapport d'intervalles de transmission d'intervalles de temps dans une trame destinée à la communication avec l'appareil externe (42) à la valeur initiale, lorsque la puissance de transmission augmentée est inférieure à la valeur de seuil,
dans lequel les intervalles de temps comprennent les intervalles de transmission et des intervalles de réception ; et
transmettre des données à l'appareil externe (42) à des instants correspondant aux intervalles de transmission dans la trame ; et
recevoir des données en provenance de l'appareil externe (42) à des instants correspondant aux intervalles de réception dans la trame.

8. Procédé selon la revendication 7, dans lequel :
l'appareil électronique (20) est connecté à un second appareil externe (10) connecté à une source d'énergie commerciale (52), et est alimenté en puissance constante à partir du second appareil externe (10), et
le procédé comprend en outre les étapes suivantes :
charger un condensateur (82) au moyen d'une partie de la puissance constante lorsque la puissance consommée par l'appareil électronique (20) est inférieure à la puissance constante ;
commander l'appareil électronique (20) au moyen de la puissance constante et d'une puissance débitée par le condensateur (82) lorsque la puissance consommée dépasse la puissance constante.

9. Procédé selon la revendication 8, dans lequel la valeur de seuil est de 33 dBm lorsqu'une puissance de 6 W est fournie par le second appareil externe (10) à l'appareil électronique et la communication sans fil est réalisée en 2G.

10. Procédé selon la revendication 7, dans lequel la réalisation de la communication sans fil comprend la transmission de données à l'appareil externe (42) au cours d'une période de temps de transmission sur la base du rapport des intervalles de transmission dans la trame.

11. Procédé selon la revendication 10, dans lequel :
la trame comprend huit intervalles de temps, et
le procédé comprend en outre les étapes suivantes :
définir quatre des huit intervalles de temps en tant qu'intervalles de transmission, lorsque la puissance de transmission augmentée est inférieure à la valeur de seuil ; et
définir l'un des huit intervalles de temps en tant qu'intervalle de transmission, lorsque la puissance de transmission augmentée est supérieure ou égale à la valeur de seuil.

12. Procédé selon la revendication 7, dans lequel :
la réalisation de la communication sans fil comprend la réalisation de la communication sans fil avec l'appareil externe (42) par le biais d'une station de base radioélectrique (36), et
l'augmentation de la puissance de transmission comprend l'augmentation de la puissance de transmission utilisée pour la communication sans fil, en réponse à une notification demandant une augmentation de la puissance de transmission, émanant de la station de base radioélectrique (36).
